Europäisches Patentamt

European Patent Office

Office européen des brevets

(11) Veröffentlichungsnummer: **0 408 991 A1**

(12) **EUROPÄISCHE PATENTANMELDUNG**

(21) Anmeldenummer: **90112778.7**

(22) Anmeldetag: **04.07.90**

(51) Int. Cl.5: **H05K 5/06**

(30) Priorität: **18.07.89 DE 8908739 U**

(43) Veröffentlichungstag der Anmeldung:
**23.01.91 Patentblatt 91/04**

(84) Benannte Vertragsstaaten:
**BE DE FR GB IT NL**

(71) Anmelder: **Siemens Aktiengesellschaft**
**Wittelsbacherplatz 2**
**D-8000 München 2(DE)**

(72) Erfinder: **Schulz, Helmut, Dipl.-Chem.-Ing.**
**Karlsruher Strasse 11**
**D-7505 Ettlingen(DE)**
Erfinder: **Zeug, Norbert, Dr.**
**Hardtstrasse 3**
**D-7514 Leopoldshafen(DE)**

(54) **Gerätegehäuse zur Aufnahme von elektrischen und elektromechanischen Schaltungskomponenten.**

(57) In das Gehäuse (1) ist eine Temperiereinrichtung (2) eingebaut, deren Innenraum ex-sicher sein soll. Dazu ist ihre Rückwand als Schottwand (3) ausgebildet, die mit gleichmäßig großen, rasterartig angeordneten Öffnungen (4) versehen ist, die mittels als Geräteträger oder Blindplatten ausgebildeter Schottplatten (5, 5') gleicher Größe verschließbar sind.

Gehäuse ist vorgesehen für den modularen Aufbau von Gerätegruppen der Hochdruck-Flüssigkeitschromatographie.

FIG 1

# GERÄTEGEHÄUSE ZUR AUFNAHME VON ELEKTRISCHEN UND ELEKTROMECHANISCHEN SCHALTUNGS-KOMPONENTEN

Die Erfindung bezieht sich auf ein Gerätegehäuse zur Aufnahme von elektrischen und elektromechanischen Schaltungskomponenten.

Beim Einsatz derartiger Geräte in explosionsgefährdeter Umgebung sind Maßnahmen zu treffen, um eine an elektrischen Komponenten eventuell auftretende Funkenbildung entweder zu unterdrücken, die elektrischen Schaltungskomponenten druckdicht zu kapseln oder sie in einem Raum unterzubringen, der gegen die explosionsgefährdete Umgebung explosionshindernd abgeschlossen ist.

Werden relativ große elektrische oder insbesondere elektromechanische Schaltungskomponenten, wie z. B. Pumpen, Elektromagnetventile und dergleichen, eingesetzt, sind aus konstruktiven und wirtschaftlichen Gründen die Gehäuse so auszulegen, daß sich lediglich die Teile der Schaltungskomponenten, an denen Funkenbildung oder Überhitzung auftreten kann, in einem entsprechend geschützten Raum befinden.

Eine Lösung dieser Aufgabe stellt ein Gerätegehäuse dar, welches die Merkmale des Anspruchs 1 aufweist. Die den explosionsgeschützten Raumteil von dem übrigen Raum trennende Schottwand kann je nach Bedarf mit gerätetragenden oder Blindschottplatten besetzt werden. Eine spätere Änderung, Umbestückung oder Erweiterung der Geräteanordnung ist aufgrund dieser Modulbauweise leicht möglich.

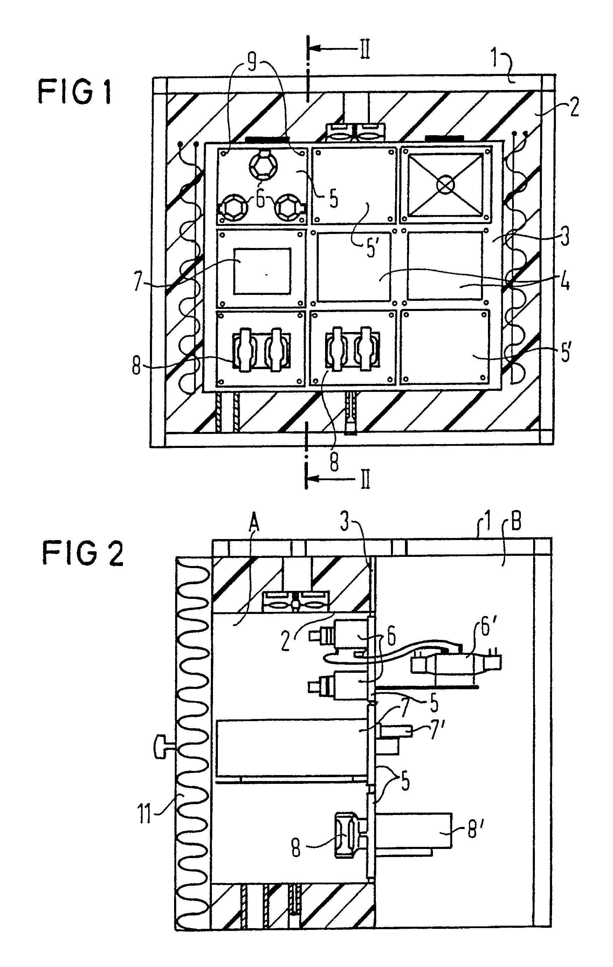

Ein Ausführungsbeispiel der Erfindung ist in den Figuren 1 und 2 in zwei Ansichten dargestellt und wird im folgenden beschrieben.

Figur 1 zeigt ein Gerätegehäuse 1 in einer Ansicht von vorne mit abgenommener Fronttür. In dem Gerätegehäuse ist eine einen quaderförmigen Innenraum umschließende Temperiereinrichtung 2, beispielsweise ein elektrisch beheizbarer und entsprechend isolierter Ofen, gasdicht befestigt. Der Innenraum der Temperiereinrichtung 2 ist nicht explosionsgefährdet, weil er nur nichtelektrische Teile von Schaltungskomponenten enthält und seine Rückwand als Schottwand 3 ausgebildet und mit einer Anzahl rasterartig angeordneter, gleich großer, rechteckiger Öffnungen 4 versehen ist, die mit Schottplatten 5 verschlossen sind. Diese sind entweder als Blindplatten 5′ oder als Geräteträger ausgebildet. So befinden sich z. B. in der ersten Schottplatte 5 der ersten Reihe pneumatisch betätigte Ventile 6, in der darunter liegenden Schottplatte ein chromatographischer Detektor 7 und in den Schottplatten der letzten Reihe elektrisch angetriebene Pumpen 8.

In die bei dem gezeigten Beispiel offengelassenen Öffnungen 4 in der zweiten Reihe können entweder blinde oder gerätetragende Schottplatten eingefügt werden.

Die Schottplatten 5 sind von gleicher Form und in ihren Außenabmessungen um so viel größer, daß sie unter Zwischenlage von Dichtungsmitteln auf die Öffnungen 4 aufsetzbar und mittels entlang der Ränder angeordneter Verbindungsmittel 9, z. B. Schraubverbindungen, befestigt sind.

Figur 2 zeigt einen Querschnitt durch das mit einer Fronttür 11 abgeschlossene Gerätegehäuse nach Figur 1. Gleiche Teile tragen gleiche Bezeichnungen.

Das Gerätegehäuse 1 mit der eingebauten Temperiereinrichtung 2 ist durch dessen als Schottwand ausgebildete Rückwand 3 in einen Teilraum A und einen Teilraum B unterteilt. Im Teilraum A befinden sich lediglich die mechanischen Teile der Schaltungskomponenten; er ist demgemäß nicht explosionsgefährdet. Im Teilraum B sind die elektrischen Teile der Schaltungskomponenten angeordnet, die als mögliche Zündquellen anzusehen sind. Durch einen hier nicht gezeichneten Druckluftanschluß wird im Teilraum B ein Überdruck erzeugt, so daß zündfähige Gasgemische aus der Umgebung nicht eindringen können. Auf der oberen Schottplatte sind die Ventile 6 mit ihren elektropneumatischen Steuerungen 6′ angebracht, auf der mittleren der Detektor 7 mit seinem Sensor und Vorverstärker 7′ und auf der unteren die Pumpen 8 mit ihren elektrischen Antrieben 8′.

Die Schaltungskomponenten 6, 7 und 8 sind also derart in den Schottplatten 5 befestigt, daß sich ihre beim Schalten oder im Störfall funkenbildenden oder überhitzbaren Teile in dem Raum B befinden, während die mechanischen Teile in den Raum A ragen.

## Ansprüche

1. Gerätegehäuse zur Aufnahme von elektrischen und elektromechanischen Schaltungskomponenten, **dadurch gekennzeichnet,**
- daß der Innenraum mit einer Schottwand (3) in zwei Teilräume (A, B) unterteilt ist,
- daß in der Schottwand (3) gleichmäßig große, rasterartig angeordnete Öffnungen (4) angebracht sind
- und daß die Öffnungen (4) mittels als Geräteträger oder Blindplatten ausgebildeter Schottplatten (5, 5′) gleicher Größe verschließbar sind.

2. Gerätegehäuse nach Anspruch 1, **dadurch gekennzeichnet,**

- daß die Öffnungen (4) in der Schottwand (3) rechteckig sind

- und daß die Schottplatten (5, 5') gleicher Form in ihren Außenabmessungen um so viel größer sind, daß sie unter Zwischenlage von Dichtungsmitteln auf die Öffnungen (4) aufsetzbar und mittels entlang der Ränder angeordneter Verbindungsmittel (9) befestigbar sind.

3. Gerätegehäuse nach Anspruch 1, **dadurch gekennzeichnet,**

- daß die Schottwand (3) die Rückwand einer in das Gerätegehäuse (1) einsetzbaren Temperiereinrichtung (2) bildet, die mit einer Fronttür (11) abgeschlossen ist.

4. Gerätegehäuse nach Anspruch 3, **dadurch gekennzeichnet,**

- daß die Temperiereinrichtung (2) gasdicht in das Gerätegehäuse (1) eingefügt ist.

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 854 028 (BBC)<br>* Seite 5, Absatz 1; Seite 6, Absatz 5 - Seite 7, Absatz 2; Seite 9, Absätze 2,3; Figuren 1,2 *<br>--- | 1,2 | H 05 K 5/06 |
| A | EP-A-0 101 865 (EMIL DAUTEL)<br>* Seite 8, Zeilen 1-9; Figur 5 *<br>--- | 1 | |
| A | DE-A-3 203 799 (KUELEG KUEHLMOEBELFABRIK UND APPARATEBAU)<br>* Seite 7, Zeile 3 - Seite 8, Zeile 15; Figur 1 *<br>----- | 1 | |

RECHERCHIERTE SACHGEBIETE (Int. Cl.5)

H 05 K 5/00
H 05 K 7/00
H 02 B 1/00
H 02 G 3/00

Der vorliegende Recherchenbericht wurde für alle Patentansprüche erstellt

| Recherchenort | Abschlußdatum der Recherche | Prüfer |
|---|---|---|
| BERLIN | 08-10-1990 | ALEXATOS G |

EPO FORM 1503 03.82 (P0403)